(19) Europäisches Patentamt
European Patent Office
Office européen des brevets

(11) EP 4 309 923 B1

(12) EUROPEAN PATENT SPECIFICATION

(45) Date of publication and mention
of the grant of the patent:
**16.10.2024 Bulletin 2024/42**

(21) Application number: **23184393.9**

(22) Date of filing: **10.07.2023**

(51) International Patent Classification (IPC):
**B60C 23/06** (2006.01)

(52) Cooperative Patent Classification (CPC):
**B60C 23/061**

(54) **CORRECTION DEVICE FOR ROTATION SPEED OF TIRE**

KORREKTURVORRICHTUNG FÜR DIE ROTATIONSGESCHWINDIGKEIT EINES REIFENS

DISPOSITIF DE CORRECTION POUR LA VITESSE DE ROTATION D'UN PNEU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.07.2022 JP 2022114630**

(43) Date of publication of application:
**24.01.2024 Bulletin 2024/04**

(73) Proprietor: **Sumitomo Rubber Industries, Ltd.
Kobe-shi, Hyogo 651-0072 (JP)**

(72) Inventors:
• **MATSUDA, Takuya
Hyogo, 651-0072 (JP)**
• **MURAKAMI, Keiichi
Hyogo, 651-0072 (JP)**

(74) Representative: **TBK
Bavariaring 4-6
80336 München (DE)**

(56) References cited:
**EP-A1- 3 431 313          JP-A- 2020 012 766
US-A1- 2017 015 153**

**Description**

BACKGROUND OF THE INVENTION

Field of the Invention

The present invention relates to a correction device, a method, and a program for correcting the rotation speed of one or a plurality of tires mounted to a vehicle.

Background Art

Japanese Laid-Open Patent Publication No. 2020-012766 discloses a correction device which corrects the rotation speed of a tire mounted to a vehicle. More specifically, the correction device cancels each of influence of slipping given by a wheel torque, influence of a lateral acceleration on the wheel torque dependency of slipping, and influence of load shift given by a lateral acceleration, from the rotation speed of the tire acquired from a rotation speed sensor. The rotation speed of the tire in which influence of slipping and influence of load shift have been canceled can be used in a system (Tire Pressure Monitoring System; TPMS) that automatically detects deflation of a tire according to a dynamic loaded radius (DLR) method, for example. According to Japanese Laid-Open Patent Publication No. 2020-012766, in the DLR method, deflation of a tire is detected based on three deflation index values referred to as DEL1 to DEL3, which are calculated based on the rotation speed of the tire mounted to each wheel of a vehicle. When the deflation index values DEL1 to DEL3 are calculated based on a corrected rotation speed as in Japanese Laid-Open Patent Publication No. 2020-012766, accuracy of deflation detection is more improved.

In Japanese Laid-Open Patent Publication No. 2020-012766, in order to calculate a rotation speed in which influences of the wheel torque and the lateral acceleration have been canceled, a parameter that specifies a regression formula in which a comparison value showing comparison between the rotation speed of a front wheel tire and the rotation speed of a rear wheel tire is modeled by using the wheel torque and the lateral acceleration, is calculated. This parameter is sequentially calculated based on data acquired during running of the vehicle, but when a tire has been gradually deflated during running, the parameter gradually changes in association with change in the dynamic loaded radius of the tire. Therefore, even when the tire has been deflated during running of the vehicle, the deflation index value calculated based on a corrected rotation speed varies only gently as long as the vehicle is running. This causes a time lag between occurrence of the deflation of the tire and detection of the deflation. However, Japanese Laid-Open Patent Publication No. 2020-012766 does not take this into consideration. The above is applied not only to a case where deflation of a tire is detected, but also to a case where the status of a road surface is estimated by using a corrected rotation speed, for example.

An object of the present invention is to provide a correction device, a method, and a program that allow, when the rotation speed of a tire is corrected based on a regression formula in which a comparison value showing comparison between the rotation speed of a front wheel tire and the rotation speed of a rear wheel tire is modeled by using an element that influences the dynamic loaded radius of the tire, early finding of a change in the regression formula for performing this correction.

SUMMARY OF THE INVENTION

A correction device according to a first aspect of the present invention is a correction device configured to correct a rotation speed of a first tire mounted to a vehicle. The correction device includes a rotation speed acquisition unit, a comparison value calculation unit, a torque acquisition unit, a regression formula specification unit, a rotation speed correction unit, and a verification unit. The rotation speed acquisition unit acquires a rotation speed of each of the first tire and a second tire mounted to the vehicle. The comparison value calculation unit calculates a comparison value showing comparison between the rotation speed of the first tire and the rotation speed of the second tire. The torque acquisition unit acquires a wheel torque. The regression formula specification unit calculates, based on the comparison value and the wheel torque, a parameter that specifies a regression formula in which the comparison value is modeled, the regression formula including an element dependent on the wheel torque. The rotation speed correction unit calculates, based on the rotation speed of the second tire and the parameter, the rotation speed of the first tire in which influence of slipping given by the wheel torque to the comparison value is canceled. The verification unit compares an estimated comparison value estimated based on the wheel torque acquired by the torque acquisition unit and the parameter calculated by the regression formula specification unit, with the comparison value calculated by the comparison value calculation unit. One of the first tire and the second tire is a front wheel tire, and another of the first tire and the second tire is a rear wheel tire. The first tire is a tire to which a driving force larger than that to the second tire is applied.

A correction device according to a second aspect of the present invention is the correction device according to the first aspect, wherein the verification unit initializes or modifies the regression formula specified by the regression formula specification unit, based on a difference between the estimated comparison value and the comparison value.

A correction device according to a third aspect of the present invention is the correction device according to the second aspect, wherein the verification unit initializes or modifies the regression formula specified by the regression formula specification unit, when a moving average of the difference is greater than a predetermined threshold, or less than a predetermined threshold.

A correction device according to a fourth aspect of the present invention is the correction device according to any one of the first aspect to the third aspect, and further includes a lateral acceleration acquisition unit configured to acquire a lateral acceleration applied to the vehicle. The regression formula further includes an element synergistically dependent on the wheel torque and the lateral acceleration, and an element dependent on the lateral acceleration alone. The verification unit compares the estimated comparison value estimated based on the wheel torque acquired by the torque acquisition unit, the lateral acceleration acquired by the lateral acceleration acquisition unit, and the regression formula specified by the regression formula specification unit, with the comparison value calculated by the comparison value calculation unit.

A correction device according to a fifth aspect of the present invention is the correction device according to any one of the first aspect to the fourth aspect, wherein, as the comparison value, the comparison value calculation unit calculates a first comparison value showing comparison between a rotation speed of one front wheel tire and a rotation speed of one rear wheel tire, out of two front wheel tires and two rear wheel tires mounted to the vehicle, and calculates a second comparison value showing comparison between a rotation speed of another front wheel tire and a rotation speed of another rear wheel tire out of the two front wheel tires and the two rear wheel tires.

A correction device according to a sixth aspect of the present invention is the correction device according to any one of the first aspect to the fifth aspect, and further includes a deflation index value calculation unit configured to calculate, based on the rotation speed of the second tire and the rotation speed of the first tire calculated by the rotation speed correction unit, a deflation index value showing comparison between rotation speeds of arbitrary two tires, out of four tires mounted to the vehicle, and rotation speeds of remaining two tires, and compare the deflation index value with a predetermined deflation threshold, to detect deflation of at least one of the tires.

A correction device according to a seventh aspect of the present invention is the correction device according to the sixth aspect, and further includes an alarm output unit configured to output a deflation alarm when a deflation state of each tire has been detected.

A correction device according to an eighth aspect of the present invention is the correction device according to any one of the first aspect to the seventh aspect, wherein the comparison value is a ratio between the rotation speed of the first tire and the rotation speed of the second tire.

A correction device according to a ninth aspect of the present invention is the correction device according to any one of the first aspect to the eighth aspect, wherein the first tire is a driving wheel tire and the second tire is a driven wheel tire.

A correction method according to a tenth aspect of the present invention is a correction method, executed by a computer, for correcting a rotation speed of a first tire mounted to a vehicle, and includes the following. A correction program according to an eleventh aspect of the present invention is a correction program for correcting a rotation speed of a first tire mounted to a vehicle, and causes a computer to execute the following. It should be noted that one of the first tire and the second tire is a front wheel tire, and another of the first tire and the second tire is a rear wheel tire. The first tire is a tire to which a driving force larger than that to the second tire is applied.

(1) Acquiring a rotation speed of each of the first tire and a second tire mounted to the vehicle.
(2) Calculating a comparison value showing comparison between the rotation speed of the first tire and the rotation speed of the second tire.
(3) Acquiring a wheel torque.
(4) Calculating, based on the comparison value and the wheel torque, a parameter that specifies a regression formula in which the comparison value is modeled and which includes an element dependent on the wheel torque.
(5) Calculating, based on the rotation speed of the second tire and the parameter, the rotation speed of the first tire in which influence of slipping given by the wheel torque to the comparison value is canceled.
(6) Comparing an estimated comparison value estimated based on the acquired wheel torque and the calculated parameter, with the calculated comparison value.

According to the aspects above, comparison between: the estimated comparison value estimated based on the regression formula in which the comparison value is modeled; and the comparison value based on which the regression formula is specified is performed by the verification unit. Accordingly, when the regression formula for correcting the rotation speed of the first tire is estimated to have changed due to deflation of a tire or another factor, this can be found early.

BRIEF DESCRIPTION OF THE DRAWINGS

FIG. 1 is a schematic diagram showing how a correction device according to an embodiment of the present invention is installed in a vehicle;
FIG. 2 is a block diagram showing an electrical configuration of the correction device;
FIG. 3 is a flowchart showing a flow of a deflation determination process including a rotation speed correction process;
FIG. 4 is a graph obtained by plotting a comparison value with respect to a wheel torque;
FIG. 5 is a graph of a moving average of a residual in time series in Example and Comparative Example; and
FIG. 6 is a graph of a deflation index value in time series in Example and Comparative Example.

DETAILED DESCRIPTION

Hereinafter, a correction device, a method, and a program according to an embodiment of the present invention will be described with reference to the drawings.

<1. Configuration of correction device>

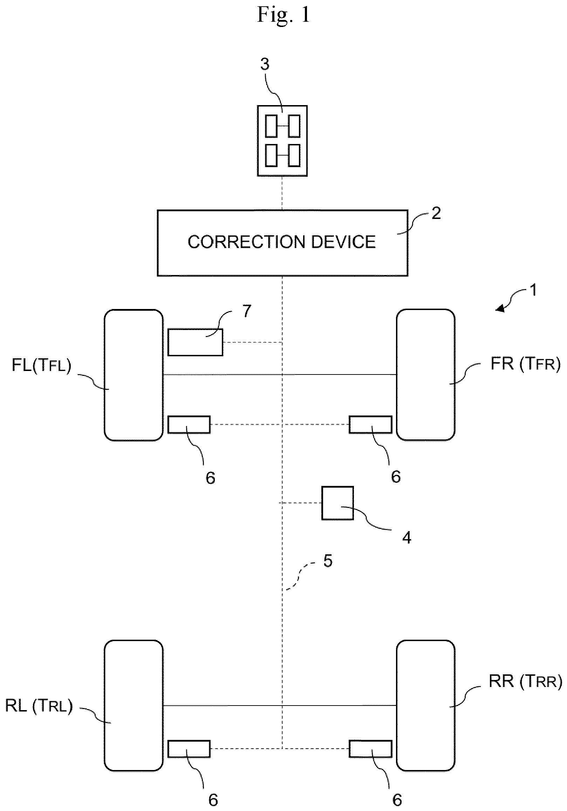

FIG. 1 is a schematic diagram showing how a correction device 2 is installed in a vehicle 1 according to the present embodiment. The vehicle 1 is a four-wheel vehicle and includes a front-left wheel FL, a front-right wheel FR, a rear-left wheel RL, and a rear-right wheel RR. Tires $T_{FL}$, $T_{FR}$, $T_{RL}$, $T_{RR}$ are mounted to the wheels FL, FR, RL, RR, respectively. The vehicle 1 according to the present embodiment is a front-engine front-wheel drive vehicle (FF vehicle), and the tires $T_{FL}$, $T_{FR}$ which are the front wheel tires are driving wheel tires, and the tires $T_{RL}$, $T_{RR}$ which are the rear wheel tires are driven wheel tires. Therefore, a driving force larger than that to the tire $T_{RL}$, $T_{RR}$ is applied to the tire $T_{FL}$, $T_{FR}$. Thus, in the present embodiment, the tires $T_{FL}$, $T_{FR}$ correspond to a first tire, and the tires $T_{RL}$, $T_{RR}$ correspond to a second tire.

The correction device 2 has a function of canceling influence of slipping of the driving wheel tire $T_{FL}$, $T_{FR}$ that changes in accordance with the wheel torque, to correct a measured rotation speed of the driving wheel tire $T_{FL}$, $T_{FR}$. In addition, the correction device 2 has a function of determining the presence or absence of deflation of the tire $T_{FL}$, $T_{FR}$, $T_{RL}$, $T_{RR}$, based on the thus-corrected rotation speed of the driving wheel tire $T_{FL}$, $T_{FR}$ and a measured rotation speed of the driven wheel tire $T_{RL}$, $T_{RR}$. The correction device 2 calculates a deflation index value according to the dynamic loaded radius (DLR) method, and when deflation of the tire $T_{FL}$, $T_{FR}$, $T_{RL}$, $T_{RR}$ has been detected based on the deflation index value, the correction device 2 outputs an alarm indicating the occurrence of deflation, via an indicator 3 installed in the vehicle 1. Details of the flow of a process (hereinafter, this may be referred to as a deflation determination process) of determining deflation of the tire $T_{FL}$, $T_{FR}$, $T_{RL}$, $T_{RR}$, including a process (hereinafter, this may be referred to as a rotation speed correction process) of correcting the rotation speed of the driving wheel tire $T_{FL}$, $T_{FR}$, will be described later.

In the present embodiment, deflation states of the tires $T_{FL}$, $T_{FR}$, $T_{RL}$, $T_{RR}$ are detected based on rotation speeds V1 to V4. Wheel speed sensors 6 are respectively mounted to the tires $T_{FL}$, $T_{FR}$, $T_{RL}$, $T_{RR}$ (more accurately, the wheels to which the tires $T_{FL}$, $T_{FR}$, $T_{RL}$, $T_{RR}$ are mounted), and each wheel speed sensor 6 detects wheel speed information (i.e., rotation speed information on a corresponding tire) of the wheel to which the wheel speed sensor 6 is mounted. Each wheel speed sensor 6 is connected to the correction device 2 through a communication line 5, and wheel speed information detected by each wheel speed sensor 6 is transmitted to the correction device 2 in real time.

As the wheel speed sensor 6, any sensor that can detect the wheel speed of the wheel FL, FR, RL, RR during running may be used. For example, a sensor of a type that measures the wheel speed from an output signal of an electromagnetic pickup can be used, or a sensor of a type that performs power generation by using rotation, like a dynamo, and measures the wheel speed from the voltage at that time, can also be used. The mounting position of the wheel speed sensor 6 is not limited in particular, either, and as long as detection of the wheel speed is possible, the mounting position can be selected as appropriate according to the type of the sensor.

A wheel torque sensor (hereinafter, WT sensor) 7 is mounted to the front-left wheel which is one driving wheel FL of the vehicle 1. The WT sensor 7 detects a wheel torque WT of the vehicle 1. The WT sensor 7 is connected to the correction device 2 through the communication line 5, and information on the wheel torque WT detected by the WT sensor 7 is transmitted to the correction device 2 in real time.

As for the WT sensor 7, as long as the wheel torque of a driving wheel of the vehicle 1 can be detected, neither the structure nor the mounting position thereof is limited in particular. Various types of wheel torque sensors are commercially available, and configurations thereof are well known, and thus, detailed description thereof is omitted here. The wheel torque can also be detected without using the WT sensor 7. For example, the wheel torque can also be estimated from the diameter of the tire and the engine torque acquired from a control device of an engine.

A lateral acceleration sensor 4 which detects a lateral acceleration $\alpha$ applied to the vehicle 1 is mounted to the vehicle 1. The mounting position of the lateral acceleration sensor 4 is not limited in particular, and can be selected as appropriate. The lateral acceleration sensor 4 is connected to the correction device 2 through the communication line 5. Information on the lateral acceleration detected by the lateral acceleration sensor 4 is transmitted to the correction device 2 in real time, similar to the wheel speed information and the information on the wheel torque WT.

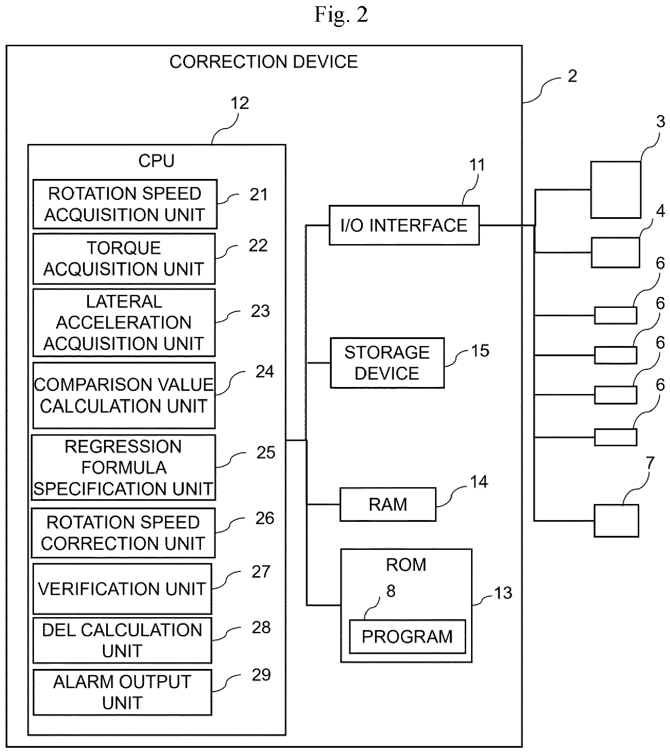

FIG. 2 is a block diagram showing an electrical configuration of the correction device 2. As shown in FIG. 2, the correction device 2, as hardware, is a control computer installed in the vehicle 1, and includes an I/O interface 11, a CPU 12, a ROM 13, a RAM 14, and a nonvolatile and rewritable storage device 15. The I/O interface 11 is a communication device for performing communication with external devices such as the lateral acceleration sensor 4, the wheel speed sensors 6, the WT sensor 7, and the indicator 3. A program 8 for controlling operation of each component of the vehicle 1 is stored in the ROM 13. The program 8 is written from a storage medium such as a CD-ROM or a writing device, to the ROM 13. The CPU 12 reads out the program 8 from the ROM 13 and executes the program 8, thereby virtually operating as a rotation speed acquisition unit 21, a torque acquisition unit 22, a lateral acceleration acquisition unit 23, a comparison value calculation unit 24, a regression formula specification unit 25, a rotation speed correction unit 26, a verification unit 27, a DEL calculation unit (deflation index value calculation unit) 28, and an alarm output unit 29. Details of operations of the components 21 to 29 will be described later. The storage device 15 is implemented by a hard disk, a flash memory, or the like. The storage place of the program 8 need not be the ROM 13, and may be the storage device 15. The RAM 14 and the storage device 15 are used as appropriate for arithmetic operation of the CPU 12.

As long as the indicator 3 can inform a user that deflation has occurred, the indicator 3 can be realized in any form such as a liquid crystal display element, a liquid crystal monitor, a plasma display, or an organic EL display, for example. For example, the indicator 3 can be realized such that four lamps respectively corresponding to the four tires $T_{FL}$, $T_{FR}$, $T_{RL}$, $T_{RR}$ are disposed according to the actual arrangement of the tires. The mounting position of the indicator 3 can also be selected as appropriate, but preferably is provided at a position, such as on an instrument panel, for example, that is easily noticeable by a driver. When the correction device 2 is connected to a car navigation system, a monitor for car navigation can also be used as the indicator 3. When a monitor is used as the indicator 3, an alarm can be an icon or character information displayed on the monitor.

<2. Deflation determination process>

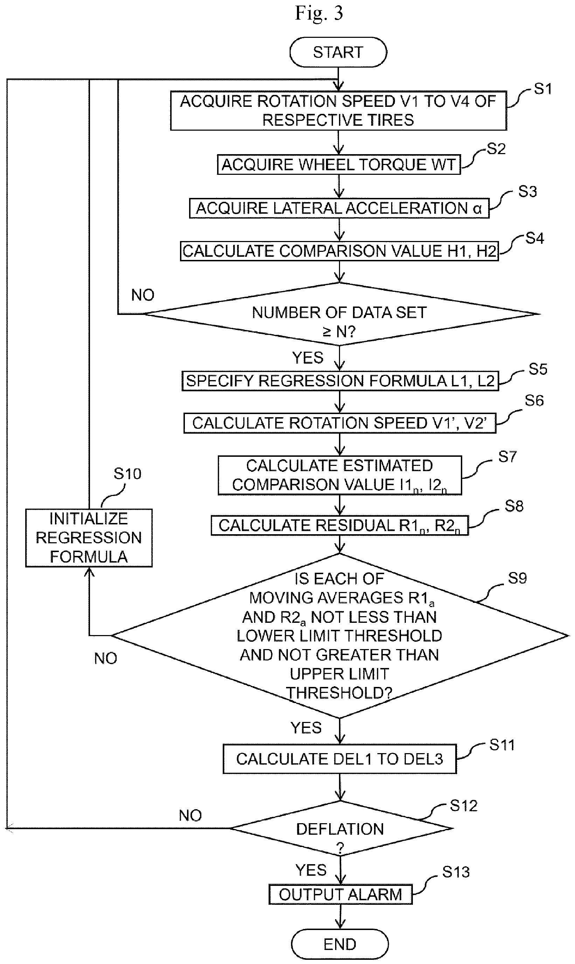

Hereinafter, with reference to FIG. 3, the deflation determination process for determining deflation of the tire $T_{FL}$, $T_{FR}$, $T_{RL}$, $T_{RR}$, including the rotation speed correction process for correcting the rotation speed of the driving wheel tire $T_{FL}$, $T_{FR}$ will be described. The process shown in FIG. 3 is repeatedly executed while power is supplied to the electric system of the vehicle 1. For example, a sequence in which step S1 starts at the timing when the vehicle 1 has started running, processes up to step S12 are repeatedly executed during running of the vehicle 1, and then the process ends at the timing when the vehicle 1 has stopped, is repeated.

In step S1, the rotation speed acquisition unit 21 acquires V1 to V4. Here, V1 to V4 are the rotation speeds of the tires $T_{FL}$, $T_{FR}$, $T_{RL}$, $T_{RR}$, respectively, i.e., the wheel speeds of the wheels FL, FR, RL, RR. The rotation speed acquisition unit 21 receives output signals from the wheel speed sensors 6 in a predetermined sampling period $\Delta T$, and converts the output signals into rotation speeds V1 to V4.

In the subsequent step S2, the torque acquisition unit 22 acquires a wheel torque WT of the vehicle 1. The torque acquisition unit 22 receives an output signal from the WT sensor 7 and converts the output signal into a wheel torque WT. The output signal received from the WT sensor 7 at this time is data at the same time or substantially the same time as the output signals from the wheel speed sensors 6 received in the latest step S1.

In the subsequent step S3, the lateral acceleration acquisition unit 23 acquires a lateral acceleration $\alpha$ applied to the vehicle 1. The lateral acceleration acquisition unit 23 receives an output signal from the lateral acceleration sensor 4 and converts the output signal into a lateral acceleration $\alpha$. The output signal received from the lateral acceleration sensor 4 at this time is data at the same time or substantially the same time as the output signals from the wheel speed sensors 6 received in the latest step S1.

In the subsequent step S4, the comparison value calculation unit 24 calculates comparison values H1, H2 between the rotation speeds of the front wheel tires and the rotation speeds of the rear wheel tires, from the rotation speeds V1 to V4 of the tires $T_{FL}$, $T_{FR}$, $T_{RL}$, $T_{RR}$. The comparison value H1, H2 is a value that becomes smaller when the wheel speed of the front wheel is larger and that becomes larger when the wheel speed of the rear wheel is larger, or a value that becomes larger when the wheel speed of the front wheel is larger and that becomes smaller when the wheel speed of the rear wheel is larger.

The comparison value H1, H2 can be defined by various methods as long as the comparison value H1, H2 has the above-described feature. However, in the present embodiment, H1 and H2 are calculated according to the formula below. That is, in the present embodiment, the comparison value H1 is a comparison value showing comparison between the rotation speed V1 of the front-left wheel tire $T_{FL}$ which is one driving wheel tire, and the rotation speed V3 of the rear-left wheel tire $T_{RL}$ which is a driven wheel tire mounted to, similar to the driving wheel tire $T_{FL}$, the left side of the vehicle 1, and is represented in a form of the ratio of the latter to the former. The comparison value H2 is a comparison value showing comparison between the rotation speed V2 of the front-right wheel tire $T_{FR}$ which is the other driving wheel tire, and the rotation speed V4 of the rear-right wheel tire $T_{RR}$ which is a driven wheel tire mounted to, similar to the driving wheel tire $T_{FR}$, the right side of the vehicle 1, and is represented in a form of the ratio of the latter to the former.

$$H1=V3/V1$$

$$H2=V4/V2$$

H1 and H2 may not necessarily be defined as above, and can also be defined as follows.

$$H1=V3^2/V1^2$$

$$H2=V4^2/V2^2$$

Alternatively, H1 and H2 can also be defined as follows.

$$H1=V4/V1$$

$$H2=V3/V2$$

The comparison value H1 defined as above is a first comparison value showing comparison between the rotation speed of one front wheel tire and the rotation speed of one rear wheel tire, out of the two front wheel tires $T_{FL}$, $T_{FR}$ and the two rear wheel tires $T_{RL}$, $T_{RR}$. The comparison value H2 defined as above is a second comparison value showing comparison between the rotation speed of the other front wheel tire and the rotation speed of the other rear wheel tire, out of the two front wheel tires $T_{FL}$, $T_{FR}$ and the two rear wheel tires $T_{RL}$, $T_{RR}$.

Data sets of the wheel speeds V1 to V4, the wheel torque WT, the lateral acceleration $\alpha$, and the comparison values H1, H2 at the same time or substantially the same time, which have been acquired in steps S1 to S4, are accumulated in the RAM 14 or the storage device 15. Steps S1 to S4 are repeatedly executed and when the number of data sets having been accumulated is not less than a number N set in advance, the process advances to step S5.

In step S5, based on the data sets of the wheel torque WT, the lateral acceleration $\alpha$, and the comparison values H1, H2 accumulated in the RAM 14 or the storage device 15, the regression formula specification unit 25 calculates parameters $(x_0, x_1, x_2, x_3)$ and $(y_0, y_1, y_2, y_3)$ that specify respective regression formulae L1, L2 in which the comparison values H1, H2 are modeled, and saves the parameters into the RAM 14 or the storage device 15. The regression formulae L1, L2 can be defined as follows, for example.

$$L1: H1=x_0WT+x_1WT\alpha+x_2\alpha+x_3$$

$$L2: H2=y_0WT+y_1WT\alpha+y_2\alpha+y_3$$

As disclosed in Japanese Laid-Open Patent Publication No. 2020-012766, $x_0WT$ and $y_0WT$ are each an element that reflects ease of occurrence of slipping of a tire according to the wheel torque WT, and depends on the wheel torque WT alone. $x_1WT\alpha$ and $y_1WT\alpha$ are each an element that reflects change in ease of occurrence of slipping according to the wheel torque WT during cornering, and synergistically depend on the wheel torque WT and the lateral acceleration $\alpha$. $x_2\alpha$ and $y_2\alpha$ are each an element that reflects asymmetry in the front and rear wheels of rotation speed change during cornering, and depends on the lateral acceleration $\alpha$ alone.

Here, in order to calculate the parameters $(x_0, x_1, x_2, x_3)$ and $(y_0, y_1, y_2, y_3)$, a plurality of data sets of (WT, H1, $\alpha$) and (WT, H2, $\alpha$) are necessary. Therefore, in the present embodiment, steps S 1 to S4 are repeatedly executed until the number of accumulated data sets are becomes a predetermined number N ($N \geq 3$). The predetermined number N may be determined in advance with reference to reliability of the parameters that are calculated, arithmetic operation resources that are assumed to be necessary, and other factors. Then, once the number of data sets exceeds N, every time one new data set is acquired, parameters ($x_0$, $x_1$, $x_2$, $x_3$) and ($y_0$, $y_1$, $y_2$, $y_3$) that specify the regression formulae L1 and L2 are calculated by using the predetermined number of newest data sets. For this calculation, in the present embodiment, a state space model represented by a state equation and an observation equation as below is defined for each of the comparison values H1 and H2. In the formulae, $X_n$ is a parameter vector which is a four-dimensional real vector, and corresponds to parameters ($x_0$, $x_1$, $x_2$, $x_3$) and ($y_0$, $y_1$, $y_2$, $y_3$). $c_n$ is a four-dimensional real vector that has WT, WT$\alpha$, $\alpha$, and 1 as elements. $e_n$ is assumed to be a standardized white noise having a mean of 0 and a variance of $\sigma^2$.

[Math. 1]

$$\text{STATE EQUATION} : X_{n+1} = X_n$$

[Math. 2]

$$\text{OBSERVATION EQUATION}: s_n = c_n^T X_n + e_n$$

In the present embodiment, the parameter vector $X_n$ in the state space model above is sequentially estimated by a Kalman filter. However, the estimation method is not limited to the method by the Kalman filter, and for example, a least squares method can be used. For efficiency of the arithmetic operation, a recursive least squares method or the like can also be used.

In step S6, the rotation speed correction unit 26 calculates corrected rotation speeds V1', V2' of the tires $T_{FL}$, $T_{FR}$ by using the parameter vector $X_n$ estimated in step S5, as the parameters that specify the regression formulae L1 and L2. The rotation speeds V1', V2' are respectively calculated based on the rotation speeds V3, V4 of the rear wheel tires when the wheel torque WT is 0 (N·m) and the lateral acceleration $\alpha$ is 0 (m/s$^2$). That is, V1'=V3/$x_3$ and V2'=V4/$y_3$ are obtained.

In steps S7 to S9, the verification unit 27 performs verification of the regression formulae L1, L2. More specifically, in steps S7 to S9, it is verified whether or not the parameters ($x_0$, $x_1$, $x_2$, $x_3$), ($y_0$, $y_1$, $y_2$, $y_3$) calculated based on the newest N data sets and the regression formulae L1, L2 specified thereby deviate to a large extent with respect to the newest data set of (WT, H1, $\alpha$) and (WT, H2, $\alpha$). Into formula (1) below represented by the parameter ($x_0$, $x_1$, $x_2$, $x_3$) specified by the regression formula specification unit 25 and a standardized white noise $e1_n$, the verification unit 27 assigns a wheel torque $WT_n$ and a lateral acceleration $\alpha_n$ based on which this parameter has been calculated, to calculate an estimated comparison value $I1_n$ (step S7). The estimated comparison value $I1_n$ is an estimated comparison value estimated based on the wheel torque $WT_n$ acquired by the torque acquisition unit 22 and the parameter specified by the regression formula specification unit 25. The verification unit 27 compares the estimated comparison value $I1_n$ with a comparison value $H1_n$ which is based on data actually acquired by the correction device 2, according to a method described later (step S8). Similarly, into formula (2) below represented by the parameter ($y_0$, $y_1$, $y_2$, $y_3$) and a standardized white noise $e2_n$, the verification unit 27 assigns the wheel torque $WT_n$ and the lateral acceleration $\alpha_n$ based on which this parameter has been calculated, to calculate an estimated comparison value $I2_n$ (step S7). In addition, the verification unit 27 compares the estimated comparison value $I2_n$ with a comparison value $H2_n$ according to a method described later (step S8).

$$I1_n = x_0 WT_n + x_1 WT_n \alpha_n + x_2 \alpha_n + x_3 + e1_n \quad (1)$$

$$I2_n = y_0 WT_n + y_1 WT_n \alpha_n + y_2 \alpha_n + y_3 + e2_n \quad (2)$$

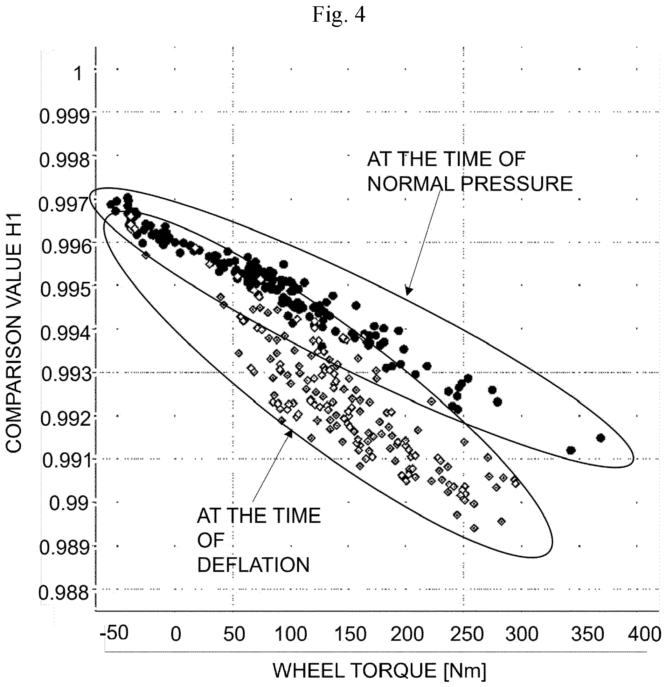

This verification is performed for the reason below. The parameters ($x_0$, $x_1$, $x_2$, $x_3$), ($y_0$, $y_1$, $y_2$, $y_3$) and the regression formulae L1, L2 specified thereby may change due to change in ease of occurrence of slipping and load shift described above and, other than that, due to factors, such as deflation of a tire, change in the road surface, etc., that influence the dynamic loaded radius of the tire with respect to the wheel torque WT. For example, a case in which, out of the front and rear wheel tires on the same side of the vehicle 1, one tire has been gradually deflated is considered. When the dynamic loaded radius of the deflated tire gradually becomes small, the comparison value H1 or H2 with respect to the wheel torque WT also varies gradually and unidirectionally in association therewith. The inventors confirmed this through an experiment. FIG. 4 is a graph obtained by plotting the comparison value H1 with respect to the wheel torque WT, in a case where the tire mounted to the FR wheel of the vehicle had a normal pressure and in a case where the tire was gradually deflated. From this graph, it can be confirmed that the data group of (WT, H1) when the tire at the FR wheel was gradually deflated tended to deviate to the lower side with respect to the data group of (WT, H1) when the tire had a normal pressure, in accordance with decrease in the comparison value H1.

Here, as described above, the parameters that specify the regression formulae L1, L2 are sequentially specified, respectively, based on a plurality of data sets of (WT, H1, $\alpha$) and (WT, H2, $\alpha$). Therefore, even after occurrence of deflation in a tire, the data sets acquired at the time of a normal pressure are reflected in the parameters above for a certain period, and the comparison values H1 and H2 also gradually vary. Thus, until the time of a normal pressure and the time of deflation become able to be distinguished based on the rotation speed corrected by use of the parameters above, a time lag from the actual time of occurrence of deflation is caused. It should be noted that, in the above experiment, a case where the tire at the FR wheel was deflated was considered, but the same also applies to a case where anther tire has been deflated. For example, the same also applies to a case where a plurality of tires, such as the tires at the FL wheel and the RR wheel, have been deflated. Further, other than the case where a tire has been deflated, also in a case where ease of occurrence of slipping on the road surface on which the vehicle 1 runs has changed, for example, the relationship between the wheel torque WT and the comparison values H1 and H2 can vary. Therefore, variation in the regression formulae L1, L2 can also occur due to change in the road surface.

When no variation has occurred in the regression formula L1 described above, it can be assumed that a residual $R1_n$ (=$H1_n$-$I1_n$), which is the difference between the comparison value $H1_n$ and the estimated comparison value $I1_n$ with respect to N data sets related to the regression formula L1, follows a distribution having a certain variance and a mean value of 0. Similarly, when no variation has occurred in the regression formula L2 described above, it can be assumed that a residual $R2_n$ (=$H2_n$-$I2_n$), which is the difference between the comparison value $H2_n$ and the estimated comparison value $I2_n$ with respect to N data sets related to the regression formula L2, follows a distribution having a certain variance and a mean value of 0. In contrast to this, when variation has occurred in the regression formulae L1, L2, the variation occurs unidirectionally as described above. Thus, it is considered that the mean value of the residual $R1_n$, $R2_n$ with respect to N data sets is shifted from 0. Using this, the verification unit 27 performs the following process.

With reference to FIG. 3 again, in step S8, the verification unit 27 calculates the residuals $R1_n$ and $R2_n$ and saves these into the RAM 14 or the storage device 15. Then, with respect to the residuals $R1_n$ and $R2_n$, moving averages $R1_a$ and $R2_a$ together with past residuals similarly calculated in step S8 having been executed are respectively calculated. As the moving average, a weighted moving average and an exponential moving average as well as a simple moving average can be adopted.

In step S9, the verification unit 27 determines whether or not the moving averages $R1_a$ and $R2_a$ calculated in step S8 are each less than a lower limit threshold, or whether or not the moving averages $R1_a$ and $R2_a$ are each greater than an upper limit threshold. A lower limit threshold and an upper limit threshold for initialization are determined in advance through an experiment or a simulation, and can be saved in the storage device 15 or the ROM 13. If the verification unit 27 determines that at least one of the moving averages $R1_a$ and $R2_a$ is less than the lower limit threshold for initialization or greater than the upper limit threshold (NO), step S10 is executed. If the verification unit 27 determines that each of the moving averages $R1_a$ and $R2_a$ is not less than the lower limit threshold and not greater than the upper limit threshold (YES), step S11 is executed.

Step S10 is executed when it is estimated that at least one of the parameters that specify the regression formulae L1 and L2 deviates to a large extent with respect to the newest data set of (WT, H1, $\alpha$) and (WT, H2, $\alpha$), and this suggests a possibility that deflation has occurred in a tire. In step S10, the verification unit 27 initializes the parameter that specifies the regression formula estimated to have deviated, thereby initializing the regression formula. That is, the parameters sequentially calculated in step S5 are deleted from the RAM 14 or the storage device 15, step S1 is executed again, and then, the process already described is repeated. Accordingly, when deflation of a tire is suspected, the regression formulae L1 and L2 can be updated before the accumulated N data sets of (WT, H1, $\alpha$) and (WT, H2, $\alpha$) are all replaced with data sets in a state where deflation is suspected. That is, when a tire has been deflated, reflection to a deflation index value calculated below is quickly performed, and the time lag up to the deflation determination and a subsequent alarm output can be shortened.

Meanwhile, the process in step S11 and subsequent steps is the deflation determination process in which the corrected rotation speeds V1', V2' are respectively replaced with rotation speeds V1, V2 below to be used. In step S11, the DEL calculation unit 28 calculates deflation index values DEL1 to DEL3 for determining the deflation state of tires. DEL1, DEL2, DEL3 are index values respectively having features described below.

DEL1: an index value that becomes larger when the rotation speeds V1, V4 are larger and becomes smaller when the rotation speeds V2, V3 are larger, or that becomes larger when the rotation speeds V2, V3 are larger and becomes smaller when the rotation speeds V1, V4 are larger.

DEL2: an index value that becomes larger when the rotation speeds V1, V2 are larger and becomes smaller when the rotation speeds V3, V4 are larger, or that becomes larger when the rotation speeds V3, V4 are larger and becomes smaller when the rotation speeds V1, V2 are larger.

DEL3: an index value that becomes larger when the rotation speeds V1, V3 are larger and becomes smaller when the rotation speeds V2, V4 are larger, or that becomes larger when the rotation speeds V2, V4 are larger and becomes smaller when the rotation speeds V1, V3 are larger.

As long as DEL1 to DEL3 have the features above, DEL1 to DEL3 can be defined by various methods. However, in the present embodiment, DEL1 to DEL3 are calculated according to the formulae below.

$$DEL1=[(V1+V4)/(V2+V3)-1]*100(\%)$$

$$DEL2=[(V1+V2)/(V3+V4)-1]*100(\%)$$

$$DEL3=[(V1+V3)/(V2+V4)-1]*100(\%)$$

In another embodiment, for example, DEL1 to DEL3 can also be defined as follows.

$$DEL1=[[(V1+V4)/2-(V2+V3)/2]/(V1+V2+V3+V4)]*100(\%)$$

$$DEL2=[[(V1+V2)/2-(V3+V4)/2]/(V1+V2+V3+V4)]*100(\%)$$

$$DEL3=[[(V1+V3)/2-(V2+V4)/2]/(V1+V2+V3+V4)]*100(\%)$$

Alternatively, DEL1 to DEL3 can also be defined as follows.

$$DEL1=(V1^2+V4^2)-(V2^2+V3^2)$$

$$DEL2=(V1^2+V2^2)-(V3^2+V4^2)$$

$$DEL3=(V1^2+V3^2)-(V2^2+V4^2)$$

When deflations of the tires $T_{FL}$, $T_{FR}$, $T_{RL}$, $T_{RR}$ advance, the respective dynamic loaded radii become small. Thus, the respective rotation speeds V1 to V4 increase, and the values of the deflation index values DEL1 to DEL3 change. In a deflation detection process according to the present embodiment, which of the tires $T_{FL}$, $T_{FR}$, $T_{RL}$, $T_{RR}$ has deflated is determined by detecting change in the deflation index values DEL1 to DEL3 from reference values. More specifically, the deflated tire can be specified according to 14 patterns below.

(1) Only $T_{FL}$ is deflated
(2) Only $T_{FR}$ is deflated
(3) Only $T_{RL}$ is deflated
(4) Only $T_{RR}$ is deflated
(5) Only $T_{FL}$, $T_{FR}$ are deflated
(6) Only $T_{FL}$, $T_{RL}$ are deflated
(7) Only $T_{FL}$, $T_{RR}$ are deflated
(8) Only $T_{FR}$, $T_{RL}$ are deflated
(9) Only $T_{FR}$, $T_{RR}$ are deflated
(10) Only $T_{RL}$, $T_{RR}$ are deflated
(11) Only $T_{FL}$, $T_{FR}$, $T_{RL}$ are deflated
(12) Only $T_{FL}$, $T_{RL}$, $T_{RR}$ are deflated

(13) Only $T_{FL}$, $T_{FR}$, $T_{RR}$ are deflated
(14) Only $T_{FR}$, $T_{RL}$, $T_{RR}$ are deflated

In the subsequent step S12, the DEL calculation unit 28 performs determination as to the deflation state. Specifically, first, using DEL1 to DEL3 calculated in step S11, the DEL calculation unit 28 performs detection of one-tire deflations (1) to (4), two-tire deflations (5) to (10), and three-tire deflations (11) to (14), out of the 14 deflated tire patterns described above. More specifically, the DEL calculation unit 28 determines whether each of DEL1 to DEL3 has increased by not less than a threshold or decreased by not less than a threshold, or the change amount is not greater than a threshold, and based on combinations of these results, the DEL calculation unit 28 determines in which pattern the tire deflation has occurred. The relationship between the change patterns of DEL1 to DEL3 and the patterns of deflated tire is as shown in Table 1, for example. The upper limit threshold and the lower limit threshold used here are determined for each of DEL1 to DEL3 through an experiment using the vehicle 1 or a simulation, and are saved in advance in the ROM 13 or the storage device 15.

[Table 1]

| | DEL1 | DEL2 | DEL3 |
|---|---|---|---|
| (1) Only $T_{FL}$ is deflated | upper limit threshold or greater | upper limit threshold or greater | upper limit threshold or greater |
| (2) Only $T_{FR}$ is deflated | lower limit threshold or less | upper limit threshold or greater | lower limit threshold or less |
| (3) Only $T_{RL}$ is deflated | lower limit threshold or less | lower limit threshold or less | upper limit threshold or greater |
| (4) Only $T_{RR}$ is deflated | upper limit threshold or greater | lower limit threshold or less | lower limit threshold or less |
| (5) Only $T_{FL}$, $T_{FR}$ are deflated | between lower limit threshold and upper limit threshold | upper limit threshold or greater | between lower limit threshold and upper limit threshold |
| (6) Only $T_{FL}$, $T_{RL}$ are deflated | between lower limit threshold and upper limit threshold | between lower limit threshold and upper limit threshold | upper limit threshold or greater |
| (7) Only $T_{FL}$, $T_{RR}$ are deflated | upper limit threshold or greater | between lower limit threshold and upper limit threshold | between lower limit threshold and upper limit threshold |
| (8) Only $T_{FR}$, $T_{RL}$ are deflated | lower limit threshold or less | between lower limit threshold and upper limit threshold | between lower limit threshold and upper limit threshold |
| (9) Only $T_{FR}$, $T_{RR}$ are deflated | between lower limit threshold and upper limit threshold | between lower limit threshold and upper limit threshold | lower limit threshold or less |
| (10) Only $T_{RL}$, $T_{RR}$ are deflated | between lower limit threshold and upper limit threshold | lower limit threshold or less | between lower limit threshold and upper limit threshold |
| (11) Only $T_{FL}$, $T_{FR}$, $T_{RL}$ are deflated | lower limit threshold or less | upper limit threshold or greater | upper limit threshold or greater |
| (12) Only $T_{FL}$, $T_{RL}$, $T_{RR}$ are deflated | upper limit threshold or greater | upper limit threshold or greater | lower limit threshold or less |
| (13) Only $T_{FL}$, $T_{FR}$, $T_{RR}$ are deflated | upper limit threshold or greater | lower limit threshold or less | upper limit threshold or greater |
| (14) Only $T_{FR}$, $T_{RL}$, $T_{RR}$ are deflated | lower limit threshold or less | lower limit threshold or less | lower limit threshold or less |

The DEL calculation unit 28 determines whether or not deflation in any of the patterns of (1) to (14) has been specified. When no deflation in any of the patterns has been specified (NO), the process returns to step S1. Meanwhile, when deflation in any of the patterns has been specified (YES), step S13 is executed.

In step S13, the alarm output unit 29 outputs a deflation alarm through the indicator 3. At this time, the indicator 3 can also provide an alarm so as to distinguish which tire has been deflated, or can also provide an alarm so as to only indicate that a tire has been deflated. The deflation alarm can also be executed in a form of a sound output.

<3. Modification>

An embodiment of the present invention has been described above. However, the present invention is not limited to the embodiment above.
For example, the modifications below can be made.
<3-1>
The acquisition method of data of the lateral acceleration $\alpha$ of the vehicle 1 is not limited to that described in the embodiment above. For example, when a yaw rate sensor is installed in the vehicle 1, the lateral acceleration $\alpha$ can also be acquired from an output value from the yaw rate sensor. That is, the lateral acceleration sensor 4 can be omitted.
<3-2>
In the embodiment above, the rotation speeds V1' and V2' obtained in step S6 are used in the deflation detection process for tires. However, the processes of steps S1 to S6 need not necessarily be used in the deflation detection process for tires, and can also be adopted in a process, etc., of estimating slipperiness of the road surface, based on the rotation speeds of the tires, for example.
<3-3>
In the embodiment above, H1 and H2 are calculated in step S4, but only H1 or only H2 may be calculated in accordance with the characteristics of the vehicle or necessity. In this case, the rotation speed of either the tire $T_{FL}$ or the tire $T_{FR}$ is corrected.
<3-4>
The function of correcting the rotation speeds of tires according to the present invention can also be applied to a rear-wheel-drive vehicle. In such a case, through a process similar to that in the embodiment above, the rotation speeds V3, V4 of the rear wheel tires which are driving wheel tires can be corrected. The function can also be applied to a four-wheel-drive vehicle when the torque allocation is constant. Out of the front wheel tires and the rear wheel tires, the rotation speed of a tire to which a larger driving force is applied can be corrected. Further, not limited to a four-wheel vehicle, the function can also be applied to a three-wheel vehicle, a six-wheel vehicle, or the like. As mentioned in the embodiment above, the function can also be applied not only to a front-engine vehicle but also to a rear-engine vehicle or the like. In this case, the rear wheel tires correspond to the first tire, and the front wheel tires correspond to the second tire.
<3-5>
As for the rotation speeds V1' and V2', the wheel torque WT need not necessarily be 0 (N·m), and a reference wheel torque $WT_R$, which is a small value that would not or hardly cause slipping of a tire, may be determined, whereby the rotation speeds V1' and V2' can also be obtained from the comparison values H1, H2 and the lateral acceleration $\alpha$ (0 is assigned as $\alpha$) in the reference wheel torque $WT_R$.
<3-6>
The comparison values H1, H2 can also be defined as follows.

$$H1=V1/V3$$

$$H2=V2/V4$$

Alternatively, the comparison values H1, H2 can also be defined as follows.

$$H1=V1/V4$$

$$H2=V2/V3$$

<3-7>
Elements dependent on the lateral acceleration $\alpha$ of the regression formulae L1, L2 need not necessarily be in the form including a first-order term of $\alpha$ such as $x_2\alpha$ and $y_2\alpha$, and may include a second- or higher-order term of $\alpha$ such as $\alpha^2$, in addition to or instead of the first-order term of $\alpha$. Elements synergistically dependent on the wheel torque WT and the lateral acceleration $\alpha$ of the regression formulae L1, L2 may be represented in a form in which WT is multiplied by a second- or higher order term of $\alpha$, in addition to or instead of a form (WT$\alpha$) in which WT is multiplied by a first-order term of $\alpha$.

<3-8>

In the embodiment above, the regression formulae L1, L2 include elements dependent on the wheel torque WT, and in addition, elements dependent on the lateral acceleration $\alpha$, but these may be omitted. That is, the regression formulae L1, L2 may be defined by elements dependent only on the wheel torque WT.

<3-9>

In step S10, as initialization, parameters that specify the regression formulae L1 and L2 are deleted, and parameters that specify the regression formulae L1 and L2 are estimated based on the data sets newly acquired thereafter. However, the update method for the parameters that specify the regression formulae L1 and L2 is not limited to this initialization. For example, parameters that specify the regression formulae L1 and L2 and that have been estimated based only on the latest data may be replaced with sequentially calculated parameters, whereby the regression formulae L1 and L2 may be modified.

[Example]

Hereinafter, Example of the present invention will be described. However, the present invention is not limited to Example below.

During running of a vehicle (FF vehicle) whose tires all had normal pressures, data sets in time series of the rotation speeds V1 to V4, the wheel torque WT, and the lateral acceleration $\alpha$ were acquired. Based on the data sets in time series, assumed data sets in time series, which were assumed to be acquired when the tire at the FL wheel started to be deflated after 1000 seconds from the start point (0 seconds) during the running of the vehicle and was deflated by 5% per minute, were produced. Using the assumed data sets, a deflation determination algorithm including initialization of the regression formula (only L1) according to the embodiment above was applied to calculate the deflation index value DEL1 in time series (Example). The lower limit threshold for the moving average $R1_a$ for initialization was set to - 60. Further, using the same assumed data sets, a deflation determination algorithm not including initialization of the regression formula according to the embodiment above was applied to calculate the deflation index value DEL1 in time series (Comparative Example). With respect to these cases, the timings at which the deflation index values DEL1 exceeded a deflation threshold determined in advance were compared.

The moving average $R1_a(t)$ in time series of the residual $R1_n$ in Example and Comparative Example was calculated based on the formula for exponential moving average below. N=200 was set.

[Math. 3]

$$R1_a(t) = \frac{2}{N+1}R1_a(t) + (1 - \frac{2}{N+1})R1_a(t-1)$$

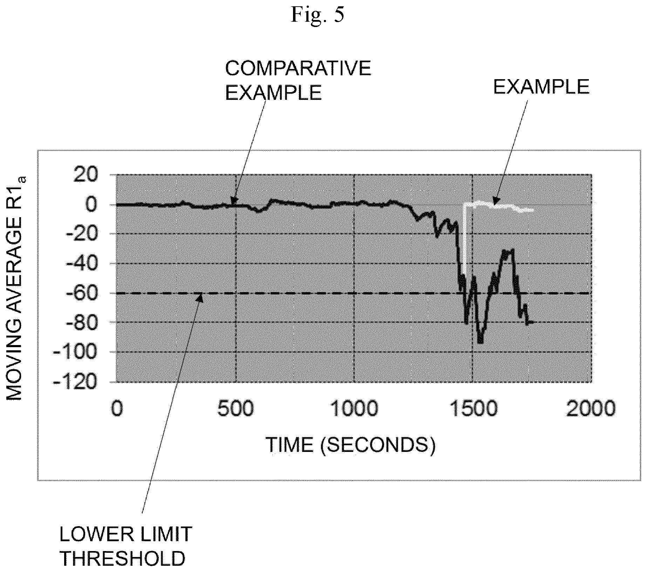

For reference, a graph in time series of $R1_a(t)$ according to Example and $R1_a(t)$ according to Comparative Example is shown in FIG. 5. $R1_a(t)$ according to Example reached the threshold -60, and then returned to the vicinity of 0 again before lapse of 1500 seconds, through execution of initialization. Meanwhile, $R1_a(t)$ according to Comparative Example reached the threshold -60 once, but did not return to the vicinity of 0.

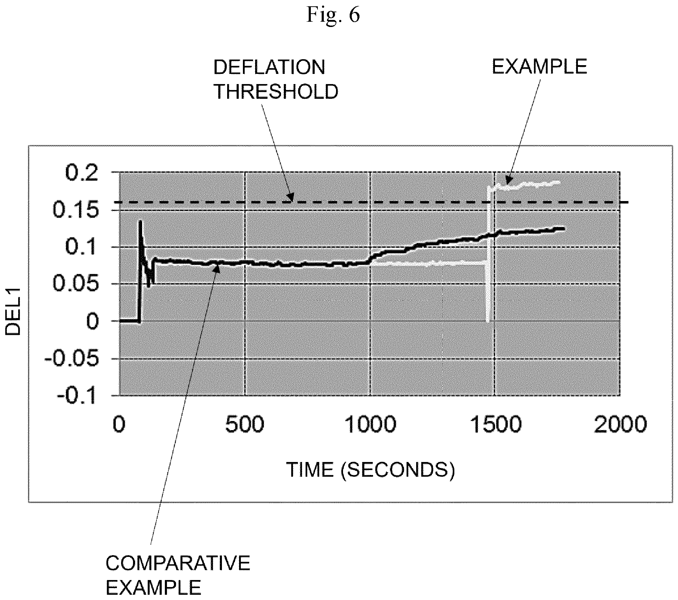

FIG. 6 is a graph in time series of the deflation index value DEL1 according to Example and the deflation index value DEL1 according to Comparative Example. As shown in FIG. 6, in Example, immediately after execution of initialization of the regression formula L1, and before lapse of 1500 seconds, DEL1 exceeded the deflation threshold, and it was confirmed that deflation can be determined and alarm output can be performed. Meanwhile, in Comparative Example, even after lapse of 1500 seconds, DEL1 did not reach the deflation threshold, and it was confirmed that the time lag from occurrence of deflation until determination of the deflation is prolonged when compared with that of Example. Thus, effects of the present invention were confirmed.

Change in a regression formula for correcting a rotation speed is found early. A correction device includes a rotation speed acquisition unit, a comparison value calculation unit, a torque acquisition unit, a regression formula specification unit, a rotation speed correction unit, and a verification unit. The rotation speed acquisition unit acquires a rotation speed of each of a first tire and a second tire mounted to a vehicle. The comparison value calculation unit calculates a comparison value showing comparison between the rotation speed of the first tire and the rotation speed of the second tire. The torque acquisition unit acquires a wheel torque. The regression formula specification unit calculates, based on the comparison value and the wheel torque, a parameter that specifies a regression formula in which the comparison value is modeled, the regression formula including an element dependent on the wheel torque. The rotation speed correction unit calculates, based on the rotation speed of the second tire and the parameter, the rotation speed of the first tire in which influence of slipping is canceled. The verification unit compares an estimated comparison value estimated based on the wheel torque and the parameter calculated by the regression formula specification unit, with the comparison value calculated by the comparison value calculation unit. One of the first tire and the second tire is a front wheel tire, and another of the first tire and the second tire is a rear wheel tire. The first tire is a tire to which a driving force larger than that to the second tire is applied.

**Claims**

1. A correction device (2) configured to correct a rotation speed (V1, V2, V3, V4) of a first tire mounted to a vehicle (1), the correction device (2) comprising:

   a rotation speed acquisition unit (21) configured to acquire a rotation speed (V1, V2, V3, V4) of each of the first tire and a second tire mounted to the vehicle (1);
   a comparison value calculation unit (24) configured to calculate a comparison value (H1, H2) showing comparison between the rotation speed (V1, V2, V3, V4) of the first tire and the rotation speed (V1, V2, V3, V4) of the second tire;
   a torque acquisition unit (22) configured to acquire a wheel torque (WT);
   a regression formula specification unit (25) configured to calculate, based on the comparison value (H1, H2) and the wheel torque (WT), a parameter $(x_0, x_1, x_2, x_3, y_0, y_1, y_2, y_3)$ that specifies a regression formula (L1, L2) in which the comparison value (H1, H2) is modeled, the regression formula (L1, L2) including an element dependent on the wheel torque (WT);
   a rotation speed correction unit (26) configured to calculate, based on the rotation speed (V1, V2, V3, V4) of the second tire and the parameter $(x_0, x_1, x_2, x_3, y_0, y_1, y_2, y_3)$, the rotation speed (V1', V2') of the first tire in which influence of slipping given by the wheel torque (WT) to the comparison value (H1, H2) is canceled; and
   a verification unit (27) configured to compare an estimated comparison value $(I1_n, I2_n)$ estimated based on the wheel torque (WT) acquired by the torque acquisition unit (22) and the parameter $(x_0, x_1, x_2, x_3, y_0, y_1, y_2, y_3)$ calculated by the regression formula specification unit (25), with the comparison value (H1, H2) calculated by the comparison value calculation unit (24), wherein
   one of the first tire and the second tire is a front wheel tire $(T_{FL}, T_{FR})$, and another of the first tire and the second tire is a rear wheel tire $(T_{RL}, T_{RR})$, and
   the first tire is a tire to which a driving force larger than that to the second tire is applied.

2. The correction device (2) according to claim 1, wherein
   the verification unit (27) initializes or modifies the regression formula (L1, L2) specified by the regression formula specification unit (25), based on a difference between the estimated comparison value $(I1_n, I2_n)$ and the comparison value (H1, H2).

3. The correction device (2) according to claim 2, wherein
   the verification unit (27) initializes or modifies the regression formula (L1, L2) specified by the regression formula specification unit (25), when a moving average $(R1_a, R2_a)$ of the difference is greater than a predetermined threshold, or less than a predetermined threshold.

4. The correction device (2) according to claim 1 or 2, further comprising

   a lateral acceleration acquisition unit (23) configured to acquire a lateral acceleration $(\alpha)$ applied to the vehicle (1), wherein
   the regression formula (L1, L2) further includes an element synergistically dependent on the wheel torque (WT) and the lateral acceleration $(\alpha)$, and an element dependent on the lateral acceleration $(\alpha)$ alone, and
   the verification unit (27) compares the estimated comparison value $(I1_n, I2_n)$ estimated based on the wheel torque (WT) acquired by the torque acquisition unit (22), the lateral acceleration $(\alpha)$ acquired by the lateral acceleration acquisition unit (23), and the regression formula (L1, L2) specified by the regression formula specification unit (25), with the comparison value (H1, H2) calculated by the comparison value calculation unit (24).

5. The correction device (2) according to claim 1 or 2, wherein
   as the comparison value (H1, H2), the comparison value calculation unit (24) calculates a first comparison value (H1) showing comparison between a rotation speed (V1, V2) of one front wheel tire $(T_{FL}, T_{FR})$ and a rotation speed (V3, V4) of one rear wheel tire $(T_{RL}, T_{RR})$, out of two front wheel tires $(T_{FL}, T_{FR})$ and two rear wheel tires $(T_{RL}, T_{RR})$ mounted to the vehicle (1), and calculates a second comparison value (H2) showing comparison between a rotation speed (V1, V2) of another front wheel tire ($T_{FL}$, $T_{FR}$) and a rotation speed (V3, V4) of another rear wheel tire ($T_{RL}$, $T_{RR}$), out of the two front wheel tires ($T_{FL}$, $T_{FR}$) and the two rear wheel tires ($T_{RL}$, $T_{RR}$).

6. The correction device (2) according to claim 1 or 2, further comprising
   a deflation index value calculation unit (28) configured to calculate, based on the rotation speed (V1, V2, V3, V4) of the second tire and the rotation speed (V1', V2') of the first tire calculated by the rotation speed correction unit (26), a deflation index value (DEL1, DEL2, DEL3) showing comparison between rotation speeds (V1, V2, V3, V4) of arbitrary two tires, out of four tires mounted to the vehicle (1), and rotation speeds (V1, V2, V3, V4) of remaining two tires, and compare the deflation index value (DEL1, DEL2, DEL3) with a predetermined deflation threshold, to detect deflation of at least one of the tires.

7. The correction device (2) according to claim 6, further comprising
   an alarm output unit (29) configured to output a deflation alarm when a deflation state of each tire has been detected.

8. The correction device (2) according to claim 1 or 2, wherein
   the comparison value (H1, H2) is a ratio between the rotation speed (V1, V2, V3, V4) of the first tire and the rotation speed (V1, V2, V3, V4) of the second tire.

9. The correction device (2) according to claim 1 or 2, wherein
   the first tire is a driving wheel tire ($T_{FL}$, $T_{FR}$, $T_{RL}$, $T_{RR}$) and the second tire is a driven wheel tire ($T_{RL}$, $T_{RR}$, $T_{FL}$, $T_{FR}$).

10. A correction method, executed by a computer, for correcting a rotation speed (V1, V2, V3, V4) of a first tire mounted to a vehicle (1), the correction method comprising:

    acquiring a rotation speed (V1, V2, V3, V4) of each of the first tire and a second tire mounted to the vehicle (1);
    calculating a comparison value (H1, H2) showing comparison between the rotation speed (V1, V2, V3, V4) of the first tire and the rotation speed (V1, V2, V3, V4) of the second tire;
    acquiring a wheel torque (WT);
    calculating, based on the comparison value (H1, H2) and the wheel torque (WT), a parameter ($x_0$, $x_1$, $x_2$, $x_3$, $y_0$, $y_1$, $y_2$, $y_3$) that specifies a regression formula (L1, L2) in which the comparison value (H1, H2) is modeled, the regression formula (L1, L2) including an element dependent on the wheel torque (WT);
    calculating, based on the rotation speed (V1, V2, V3, V4) of the second tire and the parameter ($x_0$, $x_1$, $x_2$, $x_3$, $y_0$, $y_1$, $y_2$, $y_3$), the rotation speed (V1', V2') of the first tire in which influence of slipping given by the wheel torque (WT) to the comparison value (H1, H2) is canceled; and
    comparing an estimated comparison value ($I1_n$, $I2_n$) estimated based on the acquired wheel torque (WT) and the calculated parameter ($x_0$, $x_1$, $x_2$, $x_3$, $y_0$, $y_1$, $y_2$, $y_3$), with the calculated comparison value (H1, H2), wherein one of the first tire and the second tire is a front wheel tire ($T_{FL}$, $T_{FR}$), and another of the first tire and the second tire is a rear wheel tire ($T_{RL}$, $T_{RR}$), and
    the first tire is a tire to which a driving force larger than that to the second tire is applied.

11. A correction program for correcting a rotation speed (V1, V2, V3, V4) of a first tire mounted to a vehicle (1), the correction program causing a computer to execute:

    acquiring a rotation speed (V1, V2, V3, V4) of each of the first tire and a second tire mounted to the vehicle (1);
    calculating a comparison value (H1, H2) showing comparison between the rotation speed (V1, V2, V3, V4) of the first tire and the rotation speed (V1, V2, V3, V4) of the second tire;
    acquiring a wheel torque (WT);
    calculating, based on the comparison value (H1, H2) and the wheel torque (WT), a parameter ($x_0$, $x_1$, $x_2$, $x_3$, $y_0$, $y_1$, $y_2$, $y_3$) that specifies a regression formula (L1, L2) in which the comparison value (H1, H2) is modeled, the regression formula (L1, L2) including an element dependent on the wheel torque (WT);
    calculating, based on the rotation speed (V1, V2, V3, V4) of the second tire and the parameter ($x_0$, $x_1$, $x_2$, $x_3$, $y_0$, $y_1$, $y_2$, $y_3$), the rotation speed (V1', V2') of the first tire in which influence of slipping given by the wheel torque (WT) to the comparison value (H1, H2) is canceled; and
    comparing an estimated comparison value ($I1_n$, $I2_n$) estimated based on the acquired wheel torque (WT) and the calculated parameter ($x_0$, $x_1$, $x_2$, $x_3$, $y_0$, $y_1$, $y_2$, $y_3$), with the calculated comparison value (H1, H2), wherein one of the first tire and the second tire is a front wheel tire ($T_{FL}$, $T_{FR}$), and another of the first tire and the second tire is a rear wheel tire ($T_{RL}$, $T_{RR}$), and
    the first tire is a tire to which a driving force larger than that to the second tire is applied.

**Patentansprüche**

1.  Korrekturvorrichtung (2), die dazu gestaltet ist, eine Drehgeschwindigkeit (V1, V2, V3, V4) eines ersten Reifens zu korrigieren, der an einem Fahrzeug (1) montiert ist, wobei die Korrekturvorrichtung (2) aufweist:

    eine Drehgeschwindigkeitserlangungseinheit (21), die dazu gestaltet ist, eine Drehgeschwindigkeit (V1, V2, V3, V4) von sowohl dem ersten Reifen als auch einem zweiten Reifen zu erlangen, der an dem Fahrzeug (1) montiert ist;
    eine Vergleichswertberechnungseinheit (24), die dazu gestaltet ist, einen Vergleichswert (H1, H2) zu berechnen, der einen Vergleich zwischen der Drehgeschwindigkeit (V1, V2, V3, V4) des ersten Reifens und der Drehgeschwindigkeit (V1, V2, V3, V4) des zweiten Reifens zeigt;
    eine Drehmomenterlangungseinheit (22), die dazu gestaltet ist, ein Raddrehmoment (WT) zu erlangen;
    eine Regressionsformelspezifizierungseinheit (25), die dazu gestaltet ist, auf Grundlage des Vergleichswerts $(H1, H2)$ und des Raddrehmoments (WT) einen Parameter $(x_0, x_1, x_2, x_3, y_0, y_1, y_2, y_3)$ zu berechnen, der eine Regressionsformel (L1, L2) spezifiziert, bei der der Vergleichswert (H1, H2) modelliert wird, wobei die Regressionsformel (L1, L2) ein von dem Raddrehmoment (WT) abhängiges Element umfasst;
    eine Drehgeschwindigkeitskorrektureinheit (26), die dazu gestaltet ist, auf Grundlage der Drehgeschwindigkeit (V1, V2, V3, V4) des zweiten Reifens und des Parameters $(x_0, x_1, x_2, x_3, y_0, y_1, y_2, y_3)$ die Drehgeschwindigkeit (V1', V2') des ersten Reifens zu berechnen, bei dem ein Einfluss eines Rutschens, der dem Vergleichswert (H1, H2) durch das Raddrehmoment (WT) gegeben wird, aufgehoben ist; und
    eine Überprüfungseinheit (27), die dazu gestaltet ist, einen geschätzten Vergleichswert $(I1_n, I2_n)$, der auf Grundlage des Raddrehmoments (WT), das durch die Drehmomenterlangungseinheit (22) erlangt wird, und des Parameters $(x_0, x_1, x_2, x_3, y_0, y_1, y_2, y_3)$ geschätzt wird, der durch die Regressionsformelspezifizierungseinheit (25) berechnet wird, mit dem Vergleichswert (H1, H2) zu vergleichen, der durch die Vergleichswertberechnungseinheit (24) berechnet wird, wobei
    entweder der erste Reifen oder der zweite Reifen ein Vorderradreifen $(T_{FL}, T_{FR})$ ist und ein anderer des ersten Reifens und des zweiten Reifens ein Hinterradreifen $(T_{RL}, T_{RR})$ ist, und
    der erste Reifen ein Reifen ist, auf den eine Antriebskraft aufgebracht wird, die größer ist als die auf den zweiten Reifen aufgebrachte.

2.  Korrekturvorrichtung (2) gemäß Anspruch 1, wobei
    die Überprüfungseinheit (27) die durch die Regressionsformelspezifizierungseinheit (25) spezifizierte Regressionsformel (L1, L2) auf Grundlage einer Differenz zwischen dem geschätzten Vergleichswert $(I1_n, I2_n)$ und dem Vergleichswert (H1, H2) initialisiert oder abwandelt.

3.  Korrekturvorrichtung (2) gemäß Anspruch 2, wobei
    die Überprüfungseinheit (27) die durch die Regressionsformelspezifizierungseinheit (25) spezifizierte Regressionsformel (L1, L2) initialisiert oder abwandelt, wenn ein gleitender Durchschnitt $(R1_a, R2_a)$ der Differenz größer ist als ein vorbestimmter Grenzwert oder kleiner ist als ein vorbestimmter Grenzwert.

4.  Korrekturvorrichtung (2) gemäß Anspruch 1 oder 2, die ferner aufweist:

    eine Lateralbeschleunigungserlangungseinheit (23), die dazu gestaltet ist, eine Lateralbeschleunigung $(\alpha)$ zu erlangen, die auf das Fahrzeug (1) aufgebracht wird, wobei
    die Regressionsformel (L1, L2) ferner ein Element, das auf synergistische Weise von dem Raddrehmoment (WT) und der Lateralbeschleunigung $(\alpha)$ abhängig ist, und ein Element umfasst, das von der Lateralbeschleunigung $(\alpha)$ allein abhängig ist, und
    die Überprüfungseinheit (27) den geschätzten Vergleichswert $(I1_n, I2_n)$, der auf Grundlage des durch die Drehmomenterlangungseinheit (22) erlangten Raddrehmoments (WT), der durch die Lateralbeschleunigungserlangungseinheit (23) erlangten Lateralbeschleunigung $(\alpha)$ und der durch die Regressionsformelspezifizierungseinheit (25) spezifizierten Regressionsformel (L1, L2) geschätzt wird, mit dem durch die Vergleichswertberechnungseinheit (24) berechneten Vergleichswert (H1, H2) vergleicht.

5.  Korrekturvorrichtung (2) gemäß Anspruch 1 oder 2, wobei
    die Vergleichswertberechnungseinheit (24) als den Vergleichswert (H1, H2) einen ersten Vergleichswert (H1), der einen Vergleich zwischen einer Drehgeschwindigkeit (V1, V2) von einem Vorderradreifen $(T_{FL}, T_{FR})$ und einer Drehgeschwindigkeit (V3, V4) von einem Hinterradreifen $(T_{RL}, T_{RR})$, aus zwei Vorderradreifen $(T_{FL}, T_{FR})$ und zwei Hinterradreifen $(T_{RL}, T_{RR})$, die an dem Fahrzeug (1) montiert sind, zeigt, und einen zweiten Vergleichswert (H2) berechnet, der einen Vergleich zwischen einer Drehgeschwindigkeit (V1, V2) eines anderen Vorderradreifens ($T_{FL}$, $T_{FR}$) und einer Drehgeschwindigkeit (V3, V4) eines anderen Hinterradreifens ($T_{RL}$, $T_{RR}$), aus den zwei Vorderradreifen ($T_{FL}$, $T_{FR}$) und den zwei Hinterradreifen ($T_{RL}$, $T_{RR}$), zeigt.

6. Korrekturvorrichtung (2) gemäß Anspruch 1 oder 2, die ferner aufweist:
eine Luftverlustindexwertberechnungseinheit (28), die dazu gestaltet ist, auf Grundlage der Drehgeschwindigkeit (V1, V2, V3, V4) des zweiten Reifens und der durch die Drehgeschwindigkeitskorrektureinheit (26) berechneten Drehgeschwindigkeit (V1', V2') des ersten Reifens einen Luftverlustindexwert (DEL1, DEL2, DEL3) zu berechnen, der einen Vergleich zwischen Drehgeschwindigkeiten (V1, V2, V3, V4) von beliebigen zwei Reifen, aus vier Reifen, die an dem Fahrzeug (1) montiert sind, und Drehgeschwindigkeiten (V1, V2, V3, V4) von restlichen zwei Reifen zeigt, und den Luftverlustindexwert (DEL1, DEL2, DEL3) mit einem vorbestimmten Luftverlustgrenzwert zu vergleichen, zum Erfassen eines Luftverlusts von mindestens einem der Reifen.

7. Korrekturvorrichtung (2) gemäß Anspruch 6, die ferner aufweist:
eine Alarmausgabeeinheit (29), die dazu gestaltet ist, einen Luftverlustalarm auszugeben, wenn ein Luftverlustzustand von jedem Reifen erkannt wurde.

8. Korrekturvorrichtung (2) gemäß Anspruch 1 oder 2, wobei
der Vergleichswert (H1, H2) ein Verhältnis zwischen der Drehgeschwindigkeit (V1, V2, V3, V4) des ersten Reifens und der Drehgeschwindigkeit (V1, V2, V3, V4) des zweiten Reifens ist.

9. Korrekturvorrichtung (2) gemäß Anspruch 1 oder 2, wobei
der erste Reifen ein Antriebsradreifen ($T_{FL}$, $T_{FR}$, $T_{RL}$, $T_{RR}$) ist und der zweite Reifen ein angetriebener Radreifen ($T_{RL}$, $T_{RR}$, $T_{FL}$, $T_{FR}$) ist.

10. Korrekturverfahren, das durch einen Computer ausgeführt wird, zum Korrigieren einer Drehgeschwindigkeit (V1, V2, V3, V4) eines ersten Reifens, der an einem Fahrzeug (1) montiert ist, wobei das Korrekturverfahren aufweist:

    Erlangen einer Drehgeschwindigkeit (V1, V2, V3, V4) von sowohl dem ersten Reifen als auch einem zweiten Reifen, der an dem Fahrzeug (1) montiert ist;
    Berechnen eines Vergleichswerts (H1, H2), der einen Vergleich zwischen der Drehgeschwindigkeit (V1, V2, V3, V4) des ersten Reifens und der Drehgeschwindigkeit (V1, V2, V3, V4) des zweiten Reifens zeigt;
    Erlangen eines Raddrehmoments (WT);
    Berechnen, auf Grundlage des Vergleichswerts (H1, H2) und des Raddrehmoments (WT), eines Parameters ($x_0$, $x_1$, $x_2$, $x_3$, $y_0$, $y_1$, $y_2$, $y_3$), der eine Regressionsformel (L1, L2) spezifiziert, bei der der Vergleichswert (H1, H2) modelliert wird, wobei die Regressionsformel (L1, L2) ein Element umfasst, das von dem Raddrehmoment (WT) abhängig ist;
    Berechnen, auf Grundlage der Drehgeschwindigkeit (V1, V2, V3, V4) des zweiten Reifens und des Parameters ($x_0$, $x_1$, $x_2$, $x_3$, $y_0$, $y_1$, $y_2$, $y_3$), der Drehgeschwindigkeit (V1', V2') des ersten Reifens, bei der ein Einfluss eines Rutschens, der dem Vergleichswert (H1, H2) durch das Raddrehmoment (WT) gegeben wird, aufgehoben ist; und
    Vergleichen eines geschätzten Vergleichswerts ($I1_n$, $I2_n$), der auf Grundlage des erlangten Raddrehmoments (WT) und des berechneten Parameters ($x_0$, $x_1$, $x_2$, $x_3$, $y_0$, $y_1$, $y_2$, $y_3$) geschätzt wird, mit dem berechneten Vergleichswert (H1, H2), wobei
    entweder der erste Reifen oder der zweite Reifen ein Vorderradreifen ($T_{FL}$, $T_{FR}$) ist und ein anderer des ersten Reifens und des zweiten Reifens ein Hinterradreifen ($T_{RL}$, $T_{RR}$) ist, und
    der erste Reifen ein Reifen ist, auf den eine Antriebskraft aufgebracht wird, die größer ist als die auf den zweiten Reifen aufgebrachte.

11. Korrekturprogramm zum Korrigieren einer Drehgeschwindigkeit (V1, V2, V3, V4) eines ersten Reifens, der an einem Fahrzeug (1) montiert ist, wobei das Korrekturprogramm einen Computer dazu veranlasst, auszuführen:

    Erlangen einer Drehgeschwindigkeit (V1, V2, V3, V4) von sowohl dem ersten Reifen als auch einem zweiten Reifen, der an dem Fahrzeug (1) montiert ist;
    Berechnen eines Vergleichswerts (H1, H2), der einen Vergleich zwischen der Drehgeschwindigkeit (V1, V2, V3, V4) des ersten Reifens und der Drehgeschwindigkeit (V1, V2, V3, V4) des zweiten Reifens zeigt;
    Erlangen eines Raddrehmoments (WT);
    Berechnen, auf Grundlage des Vergleichswerts (H1, H2) und des Raddrehmoments (WT), eines Parameters

$(x_0, x_1, x_2, x_3, y_0, y_1, y_2, y_3)$, der eine Regressionsformel (L1, L2) spezifiziert, bei der der Vergleichswert (H1, H2) modelliert wird, wobei die Regressionsformel (L1, L2) ein Element umfasst, das von dem Raddrehmoment (WT) abhängig ist;

Berechnen, auf Grundlage der Drehgeschwindigkeit (V1, V2, V3, V4) des zweiten Reifens und des Parameters $(x_0, x_1, x_2, x_3, y_0, y_1, y_2, y_3)$, der Drehgeschwindigkeit (V1', V2') des ersten Reifens, bei der ein Einfluss eines Rutschens, der dem Vergleichswert (H1, H2) durch das Raddrehmoment (WT) gegeben wird, aufgehoben ist; und

Vergleichen eines geschätzten Vergleichswerts $(I1_n, I2_n)$, der auf Grundlage des erlangten Raddrehmoments (WT) und des berechneten Parameters $(x_0, x_1, x_2, x_3, y_0, y_1, y_2, y_3)$ geschätzt wird, mit dem berechneten Vergleichswert (H1, H2), wobei

entweder der erste Reifen oder der zweite Reifen ein Vorderradreifen $(T_{FL}, T_{FR})$ ist und ein anderer des ersten Reifens und des zweiten Reifens ein Hinterradreifen $(T_{RL}, T_{RR})$ ist, und

der erste Reifen ein Reifen ist, auf den eine Antriebskraft aufgebracht wird, die größer ist als die auf den zweiten Reifen aufgebrachte.

## Revendications

1. Dispositif de correction (2) configuré pour corriger une vitesse de rotation (V1, V2, V3, V4) d'un premier pneu monté sur un véhicule (1), le dispositif de correction (2) comprenant :

   une unité d'acquisition de la vitesse de rotation (21) configurée pour acquérir une vitesse de rotation (V1, V2, V3, V4) de chacun du premier pneu et d'un deuxième pneu montés sur le véhicule (1) ;
   une unité de calcul de la valeur de comparaison (24) configurée pour calculer une valeur de comparaison (H1, H2) montrant la comparaison entre la vitesse de rotation (V1, V2, V3, V4) du premier pneu et la vitesse de rotation (V1, V2, V3, V4) du deuxième pneu ;
   une unité d'acquisition de couple (22) configurée pour acquérir un couple aux roues (WT) ;
   une unité de spécification de formule de régression (25) configurée pour calculer, sur la base de la valeur de comparaison (H1, H2) et du couple aux roues (WT), un paramètre $(x_0, x_1, x_2, x_3, y_0, y_1, y_2, y_3)$ qui spécifie une formule de régression (L1, L2) dans laquelle la valeur de comparaison (H1, H2) est modélisée, la formule de régression (L1, L2) comprenant un élément dépendant du couple aux roues (WT) ;
   une unité de correction de la vitesse de rotation (26) configurée pour calculer, sur la base de la vitesse de rotation (V1, V2, V3, V4) du deuxième pneu et du paramètre $(x_0, x_1, x_2, x_3, y_0, y_1, y_2, y_3)$, la vitesse de rotation (V1', V2') du premier pneu dans lequel l'influence du glissement donnée par le couple aux roues (WT) à la valeur de comparaison (H1, H2) est annulée ; et
   une unité de vérification (27) configurée pour comparer une valeur de comparaison estimée $(I1_n, I2_n)$ estimée sur la base du couple aux roues (WT) acquis par l'unité d'acquisition de couple (22) et le paramètre $(x_0, x_1, x_2, x_3, y_0, y_1, y_2, y_3)$ calculé par l'unité de spécification de formule de régression (25), avec la valeur de comparaison (H1, H2) calculée par l'unité de calcul de la valeur de comparaison (24), dans lequel
   l'un du premier pneu et du deuxième pneu est un pneu de roue avant $(T_{FL}, T_{FR})$, et l'autre du premier pneu et du deuxième pneu est un pneu de roue arrière $(T_{RL}, T_{RR})$, et
   le premier pneu est un pneu auquel est appliquée une force d'entraînement supérieure à celle appliquée au deuxième pneu.

2. Dispositif de correction (2) selon la revendication 1, dans lequel
   l'unité de vérification (27) initialise ou modifie la formule de régression (L1, L2) spécifiée par l'unité de spécification de formule de régression (25), sur la base d'une différence entre la valeur de comparaison estimée $(I1_n, I2_n)$ et la valeur de comparaison (H1, H2).

3. Dispositif de correction (2) selon la revendication 2, dans lequel
   l'unité de vérification (27) initialise ou modifie la formule de régression (L1, L2) spécifiée par l'unité de spécification de formule de régression (25), lorsqu'une moyenne mobile $(R1_a, R2_a)$ de la différence est supérieure à un seuil prédéterminé, ou inférieure à un seuil prédéterminé.

4. Dispositif de correction (2) selon la revendication 1 ou 2, comprenant en outre

   une unité d'acquisition d'accélération latérale (23) configurée pour acquérir une accélération latérale ($\alpha$) appliquée au véhicule (1), dans lequel

la formule de régression (L1, L2) comprend en outre un élément dépendant de manière synergique du couple aux roues (WT) et de l'accélération latérale ($\alpha$), et un élément dépendant de l'accélération latérale ($\alpha$) seule, et l'unité de vérification (27) compare la valeur de comparaison estimée ($I1_n$, $I2_n$) estimée sur la base du couple aux roues (WT) acquis par l'unité d'acquisition de couple (22), de l'accélération latérale ($\alpha$) acquise par l'unité d'acquisition d'accélération latérale (23) et de la formule de régression (L1, L2) spécifiée par l'unité de spécification de formule de régression (25), avec la valeur de comparaison (H1, H2) calculée par l'unité de calcul de la valeur de comparaison (24).

5. Dispositif de correction (2) selon la revendication 1 ou 2, dans lequel
comme valeur de comparaison (H1, H2), l'unité de calcul de la valeur de comparaison (24) calcule une première valeur de comparaison (H1) montrant la comparaison entre une vitesse de rotation (V1, V2) d'un pneu de roue avant ($T_{FL}$, $T_{FR}$) et une vitesse de rotation (V3, V4) d'un pneu de roue arrière ($T_{RL}$, $T_{RR}$), parmi deux pneus de roue avant ($T_{FL}$, $T_{FR}$) et deux pneus de roue arrière ($T_{RL}$, $T_{RR}$) montés sur le véhicule (1), et calcule une deuxième valeur de comparaison (H2) montrant la comparaison entre une vitesse de rotation (V1, V2) d'un autre pneu de roue avant ($T_{FL}$, $T_{FR}$) et une vitesse de rotation (V3, V4) d'un autre pneu de roue arrière ($T_{RL}$, $T_{RR}$), parmi les deux pneus de roue avant ($T_{FL}$, $T_{FR}$) et les deux pneus de roue arrière ($T_{RL}$, $T_{RR}$).

6. Dispositif de correction (2) selon la revendication 1 ou 2, comprenant en outre
une unité de calcul de la valeur de l'indice de dégonflement (28) configurée pour calculer, sur la base de la vitesse de rotation (V1, V2, V3, V4) du deuxième pneu et de la vitesse de rotation (V1', V2') du premier pneu calculée par l'unité de correction de la vitesse de rotation (26), une valeur de l'indice de dégonflement (DEL1, DEL2, DEL3) montrant la comparaison entre des vitesses de rotation (V1, V2, V3, V4) de deux pneus arbitraires, parmi quatre pneus montés sur le véhicule (1), et des vitesses de rotation (V1, V2, V3, V4) des deux autres pneus, et comparer la valeur de l'indice de dégonflement (DEL1, DEL2, DEL3) à un seuil de dégonflement prédéterminé, afin de détecter le dégonflement d'au moins l'un des pneus.

7. Dispositif de correction (2) selon la revendication 6, comprenant en outre
une unité de sortie d'alarme (29) configurée pour émettre une alarme de dégonflement lorsqu'un état de dégonflement de chaque pneu a été détecté.

8. Dispositif de correction (2) selon la revendication 1 ou 2, dans lequel
la valeur de comparaison (H1, H2) est un rapport entre la vitesse de rotation (V1, V2, V3, V4) du premier pneu et la vitesse de rotation (V1, V2, V3, V4) du deuxième pneu.

9. Dispositif de correction (2) selon la revendication 1 ou 2, dans lequel
le premier pneu est un pneu de roue d'entraînement ($T_{FL}$, $T_{FR}$, $T_{RL}$, $T_{RR}$) et le deuxième pneu est un pneu de roue entraîné ($T_{RL}$, $T_{RR}$, $T_{FL}$, TFR).

10. Procédé de correction, exécuté par un ordinateur, pour corriger une vitesse de rotation (V1, V2, V3, V4) d'un premier pneu monté sur un véhicule (1), le procédé de correction comprenant :

l'acquisition d'une vitesse de rotation (V1, V2, V3, V4) de chacun du premier pneu et d'un deuxième pneu montés sur le véhicule (1) ;
le calcul d'une valeur de comparaison (H1, H2) montrant la comparaison entre la vitesse de rotation (V1, V2, V3, V4) du premier pneu et la vitesse de rotation (V1, V2, V3, V4) du deuxième pneu ;
l'acquisition d'un couple aux roues (WT) ;
le calcul, sur la base de la valeur de comparaison (H1, H2) et du couple aux roues (WT), un paramètre ($x_0$, $x_1$, $x_2$, $x_3$, $y_0$, $y_1$, $y_2$, $y_3$) qui spécifie une formule de régression (L1, L2) dans laquelle la valeur de comparaison (H1, H2) est modélisée, la formule de régression (L1, L2) comprenant un élément dépendant du couple aux roues (WT) ;
le calcul, sur la base de la vitesse de rotation (V1, V2, V3, V4) du deuxième pneu et du paramètre ($x_0$, $x_1$, $x_2$, $x_3$, $y_0$, $y_1$, $y_2$, $y_3$), la vitesse de rotation (V1', V2') du premier pneu dans lequel l'influence du glissement donnée par le couple aux roues (WT) à la valeur de comparaison (H1, H2) est annulée ; et
la comparaison d'une valeur de comparaison estimée ($I1_n$, $I2_n$) estimée sur la base du couple aux roues (WT) acquis et le paramètre ($x_0$, $x_1$, $x_2$, $x_3$, $y_0$, $y_1$, $y_2$, $y_3$) calculé, avec la valeur de comparaison (H1, H2) calculée, dans lequel
l'un du premier pneu et du deuxième pneu est un pneu de roue avant ($T_{FL}$, $T_{FR}$), et l'autre du premier pneu et du deuxième pneu est un pneu de roue arrière ($T_{RL}$, $T_{RR}$), et

le premier pneu est un pneu auquel est appliquée une force d'entraînement supérieure à celle appliquée au deuxième pneu.

11. Un programme de correction pour corriger une vitesse de rotation (V1, V2, V3, V4) d'un premier pneu monté sur un véhicule (1), le programme de correction amenant un ordinateur à exécuter :

l'acquisition d'une vitesse de rotation (V1, V2, V3, V4) de chacun du premier pneu et d'un deuxième pneu montés sur le véhicule (1) ;
le calcul d'une valeur de comparaison (H1, H2) montrant la comparaison entre la vitesse de rotation (V1, V2, V3, V4) du premier pneu et la vitesse de rotation (V1, V2, V3, V4) du deuxième pneu ;
l'acquisition d'un couple aux roues (WT) ;
le calcul, sur la base de la valeur de comparaison (H1, H2) et du couple aux roues (WT), un paramètre ($x_0$, $x_1$, $x_2$, $x_3$, $y_0$, $y_1$, $y_2$, $y_3$) qui spécifie une formule de régression (L1, L2) dans laquelle la valeur de comparaison (H1, H2) est modélisée, la formule de régression (L1, L2) comprenant un élément dépendant du couple aux roues (WT) ;
le calcul, sur la base de la vitesse de rotation (V1, V2, V3, V4) du deuxième pneu et du paramètre ($x_0$, $x_1$, $x_2$, $x_3$, $y_0$, $y_1$, $y_2$, $y_3$), la vitesse de rotation (V1', V2') du premier pneu dans lequel l'influence du glissement donnée par le couple aux roues (WT) à la valeur de comparaison (H1, H2) est annulée ; et
la comparaison d'une valeur de comparaison estimée ($I1_n$, $I2_n$) estimée sur la base du couple aux roues (WT) acquis et le paramètre ($x_0$, $x_1$, $x_2$, $x_3$, $y_0$, $y_1$, $y_2$, $y_3$) calculé, avec la valeur de comparaison (H1, H2) calculée, dans lequel
l'un du premier pneu et du deuxième pneu est un pneu de roue avant ($T_{FL}$, $T_{FR}$), et l'autre du premier pneu et du deuxième pneu est un pneu de roue arrière ($T_{RL}$, $T_{RR}$), et
le premier pneu est un pneu auquel est appliquée une force d'entraînement supérieure à celle appliquée au deuxième pneu.

Fig. 1

Fig. 2

CORRECTION DEVICE — 2

CPU — 12

| ROTATION SPEED ACQUISITION UNIT | — 21 |

| TORQUE ACQUISITION UNIT | — 22 |

| LATERAL ACCELERATION ACQUISITION UNIT | — 23 |

| COMPARISON VALUE CALCULATION UNIT | — 24 |

| REGRESSION FORMULA SPECIFICATION UNIT | — 25 |

| ROTATION SPEED CORRECTION UNIT | — 26 |

| VERIFICATION UNIT | — 27 |

| DEL CALCULATION UNIT | — 28 |

| ALARM OUTPUT UNIT | — 29 |

I/O INTERFACE — 11

STORAGE DEVICE — 15

RAM — 14

ROM — 13
8
PROGRAM

3
4
6
6
6
6
7

## Fig. 3

```
            START

S1  ACQUIRE ROTATION SPEED V1 TO V4 OF
        RESPECTIVE TIRES

S2  ACQUIRE WHEEL TORQUE WT

S3  ACQUIRE LATERAL ACCELERATION α

S4  CALCULATE COMPARISON VALUE H1, H2

        NUMBER OF DATA SET          NO
            ≥ N?

            YES

S5  SPECIFY REGRESSION FORMULA L1, L2

S6  CALCULATE ROTATION SPEED V1', V2'

S7  CALCULATE ESTIMATED
    COMPARISON VALUE I1n, I2n

S8  CALCULATE RESIDUAL R1n, R2n

           IS EACH OF
        MOVING AVERAGES R1a
        AND R2a NOT LESS THAN          S9
        LOWER LIMIT THRESHOLD
        AND NOT GREATER THAN
          UPPER LIMIT
          THRESHOLD?

S10 INITIALIZE
    REGRESSION      NO
    FORMULA

            YES

S11 CALCULATE DEL1 TO DEL3

      NO        DEFLATION          S12
                   ?

            YES

S13 OUTPUT ALARM

            END
```

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020012766 A